# EUROPEAN PATENT APPLICATION

(11) **EP 1 577 406 A1**
(43) Date of publication of application: **21.09.2005**
(21) Application number: 03808901.7
(22) Date of filing: 17.10.2003
(51) Int. Cl.: C21D 9/00, C21D 1/06, C22C 38/00, C22C 38/58, C23C 8/32, F16B 25/00, F16B 33/06

(54) **SCREW OR TAPPING SCREW**

(30) Priority: 17.10.2002 JP 2002303657
(71) Applicant: National Institute for Materials Science, Ibaraki 305-0047 (JP)
(72) Inventor: TORIZUKA, Shiro, Tsukuba-shi, Ibaraki 305-0047 (JP); NAGAI, Kotobu, Tsukuba-shi, Ibaraki 305-0047 (JP); KOMATSU, Takafumi, Suwa-shi, Nagano 392-0012 (JP); MIYASHITA, Naohisa, Suwa-shi, Nagano 392-0021 (JP); TAKAGI, Fumito, Okaya-shi, Nagano 394-0004 (JP); MATSUZAWA, Masaaki, Suwa-shi, Nagano 392-0016 (JP); MIYASAKA, Yoshimasa, Chino-shi, Nagano 391-0012 (JP); HATANO, Yoshiki, Suwa-shi, Nagano 392-0027 (JP); FUJIMORI, Chiaki, Suwa-shi, Nagano 392-0131 (JP); OSAKA, Masayoshi, Suwa-shi, Nagano 392-0015 (JP); UEMATSU, Masaaki, Suwa-gun, Nagano 399-0214 (JP); HAMA, Hajime, Suwa-shi, Nagano 392-0015 (JP)
(74) Representative: Calamita, Roberto
(86) International application number: PCT/JP2003/013307
(87) International publication number: WO 2004/035839

(57) **Abstract**

A screw or a tapping screw, comprising an ultra fine structure steel having ferrite grains of 3 µm or smaller in average grain size and a nitrided layer on a surface part, wherein a strength is increased, a surface hardness is increased, and the surface hardness and an inside hardness are kept in balance, whereby a novel tapping screw and novel general screws can be provided.

## Description

### Technical Field

The present invention relates to a screw or a tapping screw, and a production method therefor. More specifically, it relates to a novel screw or a tapping screw, having a high strength and a high surface hardness, with the surface hardness and an inside hardness well balanced, and a production method therefor.

### Background Art

Conventionally, a tapping screw has the hardness, the impact resistance and the tensile strength necessary for tapping ensured by using SWCH-10 to 20 or SUS410 as the material and executing the carburizing and quenching process after the machining process. Moreover, conventionally, the surface process such as zinc plating has been applied after the carburizing process in order to keep the corrosion resistance. Delayed fracture generated by plating, or the like involves a problem.

However, according to the conventional carburizing process, a problem arises in that the carburizing layer in the surface part is as thick as 0.2 mm or more so as to harden the inside of the tapping screw main body. According to a tapping screw, it is necessary that the surface part hardness is higher than the main body inside hardness. Furthermore, since the hardness balance is important and it is desired that the thickness of the surface part having a higher hardness is appropriate, the conventional carburizing process has not been practically satisfactory. Moreover, according to the carburizing process, since a surface process such as plating is further required for keeping the corrosion resistance, a problem is involved in that the troublesomeness of the processes poses a heavy burden in the production steps.

On the other hand, the present inventors have proposed a novel high strength screw capable of ensuring the strength by an ultra fine structure independent of addition of an alloy element or a refining process, and a production method therefor (prior application).

The novel high strength screw is characterized in being an ultra fine structure made of ferrite grains having, for example, a 1 µm or less average grain size.

Patent document: Japanese Patent Application No. 2002-164994

Accordingly, an object of the present invention is to provide a novel tapping screw having a high strength and a high surface hardness with the surface hardness and the internal hardness well balanced, capable of solving the problems of the conventional tapping screws based on the technological knowledge of the high strength screw already proposed by the present inventors while utilizing the characteristics thereof, and novel screws on the whole.

### Disclosure of the Invention

In order to solve the above-mentioned problems, the present invention provides firstly a screw or a tapping screw characterized in having an ultra fine structure of ferrite grains having a 3 µm or less average grain size and a nitride layer in the surface part, secondly screws or tapping screws characterized in having a ferrite grain ultra fine structure having a 1 µm or less average grain size, thirdly, those characterized in that the nitride layer in the surface part has a 100 µm or less thickness, and fourthly those characterized in that the hardness of the surface part of the nitride layer is 450 or more in the Vickers hardness, respectively. The nitride layer denotes a compound layer in the uppermost surface part (for example, an area mainly having Fe₃N, Fe₂₋₃(C, N) referred to as the e phase), and a precipitation layer under the compound layer (for example, a precipitation area of a nitride of Fe₄N referred to as y' or an added element).

Moreover, the present invention fifthly provides a production method for the above-mentioned screws or tapping screws characterized in that a low temperature soft-nitriding process is applied at a temperature of 480°C to 590°C to a compact for the above-mentioned screw or tapping screw having an ultra fine structure of ferrite grains having a 3 µm or less average grain size, and furthermore, sixthly a production method characterized in that a low temperature soft-nitriding process is applied at a temperature of 500°C to 550°C.

### Brief Description of the Drawings

FIG 1 is a microscope photograph showing a cross section of a thread part after gas soft-nitriding and a thread part after tapping of example 1.
FIG 2 is a microscope photograph showing a cross section of a thread part after gas soft-nitriding and a thread part after tapping of example 2.
FIG 3 is a microscope photograph showing a cross section of a thread part after gas soft-nitriding and a thread part after tapping of example 3.
FIG 4 is a microscope photograph showing a cross section of a thread part after gas soft-nitriding and a thread part after tapping of example 4.
FIG 5 is a SEM photograph showing a structure in the vicinity of a nitride layer of example 1 and comparative example 1.

### Best Mode for Carrying Out the Invention

For the present invention having the above-mentioned characteristics, embodiments thereof will be explained hereafter.

As it is disclosed in also the above-mentioned prior application, a screw having an ultra fine structure consisting of ferrite grains having a 3 µm or less average grain size, furthermore, a 1 µm or less average grain size can be obtained by using a steel having a ferrite grain ultra fine structure as a strand and thread shaping by a cold or hot process. The ferrite ultra fine structure itself can be produced by, for example, applying a multi direction multi path rolling to a thick steel plate in a hot temperature range so as to introduce a distortion larger than the critical distortion.

Thereby, one having a high strength with a 1.0 µm ferrite average grain size and a 700 MPa tensile strength, or one with a 0.7 µm and 800 MPa can be realized.

As a steel having such an ultra fine structure, in terms of its composition, since the mechanism of realizing a high strength by the phase transformation is not at all utilized so that addition of an alloy element for improving the strength is not needed, the steel composition is not limited. For example, in addition to a ferrite single phase steel and a steel made of a ferrite and a cementite, a wide range of steel materials can be used. More specifically, one having a composition based on the weight% of:
C: 0.001% or more and 1.2% or less,
Si: 2% or less,
Mn: 3% or less,
P: 0.2% or less,
S: 0.02% or less,
Al: 0.3% or less,
N: 0.02% or less,
Total of Cr, Mo, Cu, Ni: 5% or less,
Total of Nb, Ti, V: 0.5% or less,
B: 0.01% or less,

Remainder Fe and inevitable impurities without addition of an alloy element can be presented as an example. Of course an alloy element of the above-mentioned Cr, Mo, Cu, Ni, Nb, Ti, V, B, or the like may be added beyond the above-mentioned range or on the contrary, it may not be contained at all.

The present invention is characterized in that a low temperature soft-nitriding process is applied to a compact shaped as a screw or a tapping screw. The means for low temperature soft-nitriding itself has conventionally been known as a nitriding means by a gas or a salt bath. It is characterized in that nitriding is carried out in a shorter time than the nitriding process called "main nitriding".

Although the carburizing process for a screw has ever been known, a screw performed a nitriding process, and furthermore, a low temperature soft-nitriding process has not at all been known.

A screw or a tapping screw of the present invention has a nitride layer in the surface part preferably with a thickness of 100 µm or less. Then, the surface hardness according to the presence of the nitride layer is preferably 450 or more in the Vickers hardness.

Then, the Vickers hardness of the inside of the main body of a screw or a tapping screw, excluding the surface part is preferably 450 or less. Accordingly, the thickness of the surface part nitride layer, and the hardness balance of the surface part and the inside are extremely important for a tapping screw so that they provide the extremely significant effects realized by the present invention.

For example, for a soft-nitriding process temperature satisfying the lowest hardness Hv 450 (experience value) for tapping an iron plate (SPC, or the like) by a tapping screw, 480°C or higher is needed by the transition of the gas soft-nitriding process condition and the hardness. In general, the temperature for the soft-nitriding process is 580°C to 600°C, however, in the case the process is applied at the temperature, the ultra fine crystal grains may become coarse so that the purpose of the ultra fine structure steel may be lost. The temperature of starting coarseness of the crystal grains is in general 550°C, however, even at 600°C, by having the process time to 1.0 hour or less, the coarseness of the crystal grains can be restrained. However, a stable nitride layer can hardly be obtained due to the cutback of the time. In the light of this, according to the present invention, the process temperature in general is in a range of 480°C to 590°C, however, the process temperature is preferably 500°C to 550°C.

Then, with reference to the examples, it will be explained in further details hereafter. Of course the invention is not limited by the examples shown below.

### Examples

Table 1 shows steel compositions. Ultra fine structure steels having 0.5 µm to 1.0 µm average ferrite grain sizes were produced as screw materials. Moreover, for the comparison, strands having a 20 µm average grain size of SS400 and SWCH18A were prepared.

**Table 1**

| | | | | | | | | |
|---|---|---|---|---|---|---|---|---|
| [mass%] | | | | | | | | |

| Material No. | C | Si | Mn | P | S | s.Al | N | Ferrite grain size (µm) |
|---|---|---|---|---|---|---|---|---|
| 1 | 0.05 | <0.01 | 2.0 | 0.01 | 0.001 | 0.031 | 0.002 | 0.6 |
| 2 | 0.15 | 0.3 | 1.5 | 0.01 | 0.001 | 0.031 | 0.002 | 0.7 |
| 3 | 0.15 | 0.3 | 1.5 | 0.01 | 0.001 | 0.031 | 0.002 | 1.0 |
| 4 | 0.45 | 0.3 | 1.5 | 0.01 | 0.001 | 0.031 | 0.002 | 0.5 |
| 5 | 0.76 | 0.3 | 1.5 | 0.01 | 0.001 | 0.031 | 0.002 | 0.5 |
| 6 (SWCH18A) | 0.16 | 0.1 | 0.8 | 0.01 | 0.001 | 0.031 | 0.002 | 20.0 |
| 7 (SS400) | 0.16 | 0.3 | 0.5 | 0.01 | 0.001 | 0.031 | 0.002 | 20.0 |

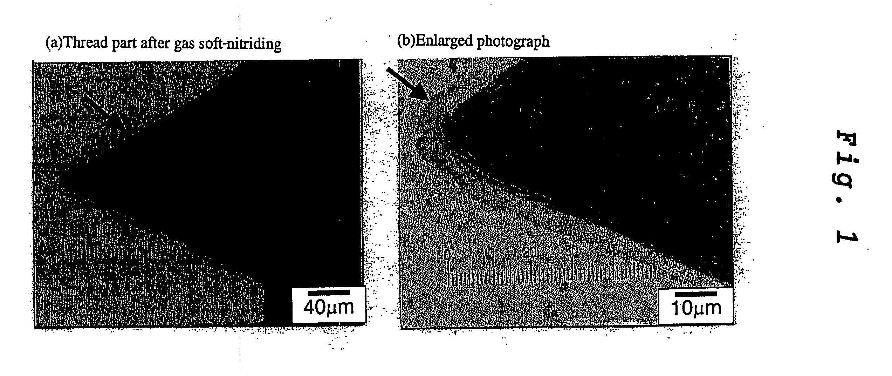

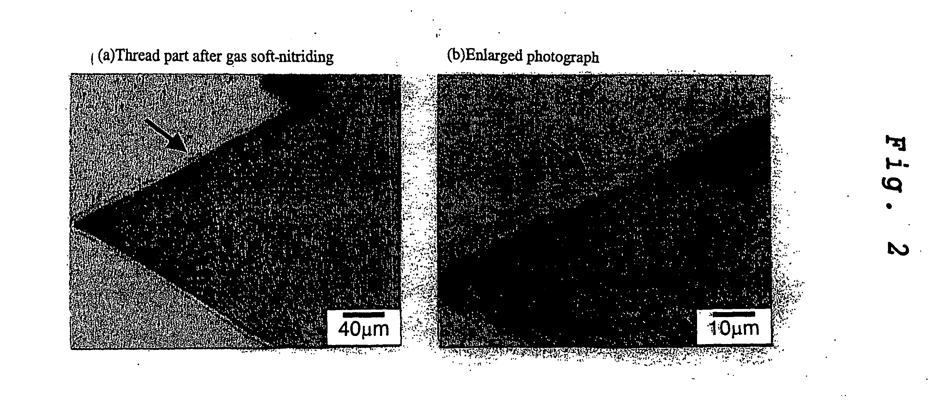

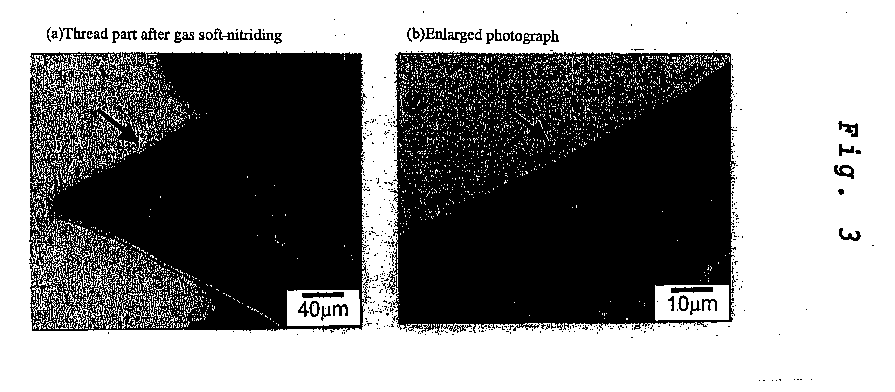

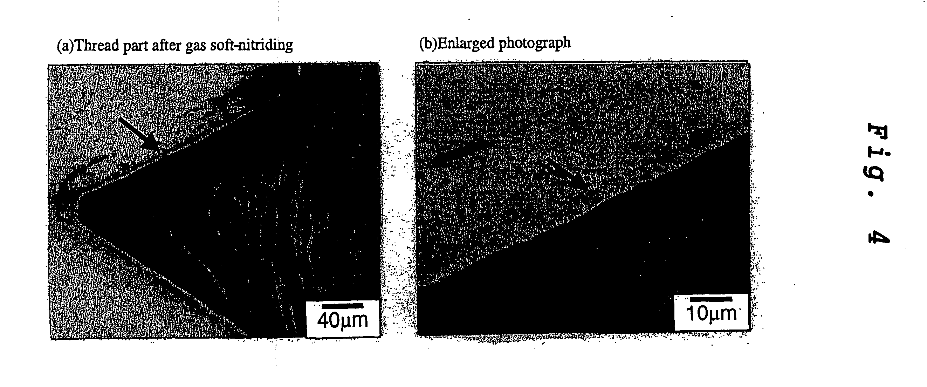

According to shaping and form rolling, using these materials, M6 screws were produced. Next, a gas soft-nitriding process was applied to these screws. The gas soft-nitriding conditions were 530°C in a gas mixture atmosphere of NH₃ and CO₂ for 2 hours. FIGS. 1 to 4 show cross sectional photographs of the thread parts of examples 1 to 4. Formation of nitride layers (compound layers) of about a 10 µm thickness were confirmed.

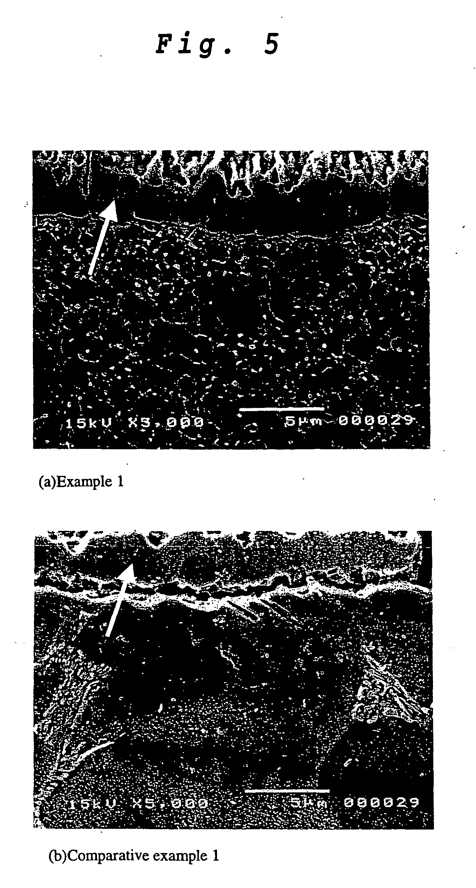

FIG 5 shows structure photographs in the vicinity of the nitride layers. In the example 1, ferrite in the vicinity of the nitride layer has a 1 µm or less average grain size, and thus it is apparent that an extremely fine structure is maintained. On the other hand, in the case of comparative example 1, the grain size in the vicinity of the nitride layer is coarse.

Table 2 shows the Vickers hardness of the screw surface and core parts. According to examples 1 to 4, surface hardness exceeds 560 so that an extremely high hardness can be obtained. At the same time, the surface hardness required to a tapping screw is satisfied. The surface hardness is the hardness beneath the compound layer, or the hardness of the area including a compound layer.

On the other hand, the core part hardness exceeds 200 for the lowest one and has a higher hardness than 142 of comparative example 1. Moreover, 450 or more of the surface layer Vickers hardness and 450 or less of the inside hardness, which are required for the tapping screw, are satisfied.

**Table 2**

| | Material No. | Nitride layer thickness (µm) | Surface hardness (Hv100g) | Screw core part hardness (Hv5Kg) |
|---|---|---|---|---|
| Example 1 | 2 | 10 | 611 | 208 |
| Example 2 | 3 | 10 | 563 | 199 |
| Example 3 | 4 | 10 | 632 | 287 |
| Example 4 | 5 | 10 | 661 | 345 |
| Comparative example 1 | 6 | 10 | 557 | 142 |

FIGS. 1 to 4 also show photographs of a cross section by taking out a screw after piercing a 1 mm thickness soft steel plate, that is, after tapping. The peel off of the nitride layer (compound layer) was not observed, and thus it was confirmed that the nitride layer has a peeling resistance strength sufficient for practical use as a tapping screw. Also in the case of comparative example, tapping can be executed for a soft member.

Furthermore, the screws of examples 1 to 4 have a corrosion resistance sufficient for practical use.

Table 3 shows change of tensile strength before and after the gas soft-nitriding of the material No. 1, and change was barely observed. Moreover, for comparison, material No. 7 was carburized and quenched for examining tensile strength. Strength was poorer than material No. 1 with the gas soft-nitriding applied. Therefore, application of gas soft-nitriding to an ultra fine structure steel can be referred to as an excellent method capable of raising surface hardness without lowering material tensile strength.

The conventional tapping screws need carburizing and quenching. For that, screws needs to be heated to 800°C or higher. However, by combining an ultra fine structure and a low temperature soft-nitriding technique, a tapping screw can be produced by a heat treatment at a temperature much lower than that of the conventional technique.

**Table 3**

| | Material No. | Heat treatment conditions | Tensile strength (MPa) |
|---|---|---|---|
| Example 5 | 1 | Material strength | 771 |
| | | Strength after gas soft-nitriding | 759 |
| Comparative example 2 | 7 | Material strength | 376 |
| | | Strength after carburizing and quenching | 557 |

### Industrial applicability

As heretofore explained in detail, the present invention provides a screw or a tapping screw having excellent characteristics, which have not yet known.

Since the corrosion resistance is ensured by the soft-nitriding process, the present invention is effective for all the screws to be used outside a building or in high humidity environment. For example, it can be used for a screw for assembling a prefab, an automobile (especially for mounting a number plate), a bath, a toilet, an air conditioner, a compressor, domestic electric appliances such as a washing machine and a refrigerator. For austenite based stainless steels such as SUS 304, since a combination of a bolt and a nut has been adopted so far for the incapability of producing a tapping screw, the present invention is extremely effective for substitute therefor.

Then, a combination of an ultra fine structure steel and gas soft-nitriding of the present invention has the excellent anti tensile strength, impact resistance, fatigue resistance and delay destruction resistance compared with a combination of the conventional iron steel and carburizing and quenching. Especially from the viewpoint of impact resistance, it is effective for an automobile (for mounting a tire), a vehicle, a machine tool, or the like.

## Claims

1. A screw or a tapping screw **characterized in** having an ultra fine structure of ferrite grains having a 3 µm or less average grain size and a nitride layer in a surface part.

2. The screw or the tapping screw according to claim 1, **characterized in** the ultra fine structure of ferrite grains having a 1 µm or less average grain size.

3. The screw or the tapping screw according to claim 1 or 2, **characterized in that** a nitride layer in the surface part has a 100 µm or less thickness.

4. The screw or the tapping screw according to any of claims 1 to 3, **characterized in that** hardness of the nitride layer of the surface part is 450 or more in Vickers hardness.

5. A production method for the screw or tapping screw according to any of claims 1 to 4, **characterized in that** a low temperature soft-nitriding process is applied at a temperature of 480°C to 590°C to a compact of a screw or a tapping screw having an ultra fine structure of ferrite grains having a 3 µm or less average grain size.

6. The production method for a screw or a tapping screw according to claim 5, **characterized in that** a low temperature soft-nitriding process is applied at a temperature of 500°C to 550°C.
